# EUROPÄISCHE PATENTSCHRIFT

(11) **EP 1 816 366 B1**
(45) Veröffentlichungstag und Bekanntmachung des Hinweises auf die Patenterteilung: **09.09.2009**
(21) Anmeldenummer: 07000397.5
(22) Anmeldetag: 10.01.2007
(51) Int. Cl.: F16D 13/58

(54) **Reibungskupplung**
friction clutch
Embrayage à friction

(30) Priorität: 03.02.2006 DE 102006005388
(43) Veröffentlichungstag der Anmeldung: 08.08.2007
(73) Patentinhaber: LuK Lamellen und Kupplungsbau Beteiligungs KG, 77815 Bühl (DE)
(72) Erfinder: Becht, Marco, 77815 Bühl (DE); Mán, Lászlo, Dr., 77833 Ottesweier-Unzhurst (DE); Friedmann, Oswald, 77839 Lichtenau (DE)

(56) Entgegenhaltungen:
- DE-A1- 1 945 233
- DE-A1- 10 252 740
- FR-A1- 2 580 752

## Beschreibung

Die Erfindung betrifft Reibungskupplungen, bestehend zumindest aus einem Gehäuse und einer mit diesem drehfest, jedoch begrenzt axial verlagerbar gekoppelten Anpressplatte, wobei am Gehäuse eine Hebelanordnung verschwenkbar gelagert ist, mittels der die Anpressplatte beaufschlagbar ist, wobei die Hebelanordnung zumindest aus einer Vielzahl von in ringartiger Anordnung vorgesehenen Hebelelementen besteht.

Der Begriff Hebelanordnung umfasst sowohl Tellerfedern mit einem ringförmigen, als Energiespeicher dienenden Grundkörper, von dem aus zumindest radial nach innen verlaufenden Zungen ausgehen, als auch tellerfederartig ausgebildete Bauteile, welche Hebelelemente bilden. Derartige tellerfederartige Hebelelemente sind beispielsweise durch Figur 2 der DE 102 52 740 A1, die Figur 2 der US 2,117,482, der DE 103 40 665 A1 und der EP 1 452 760 A1 bekannt geworden.

Der Erfindung lag die Aufgabe zugrunde, bei Reibungskupplungen der eingangs genannten Art den Betätigungswirkungsgrad zu verbessern, so dass der Ausrückweg auf ein Minimum reduziert werden kann. Weiterhin soll eine freie Auswahl des Verschwenkdurchmessers für die Hebelanordnung möglich sein. Darüber hinaus soll eine einfache und kostengünstige Montage und Herstellung der Reibungskupplungen gewährleistet werden.

Gemäß der Erfindung wird dies bei einer Reibungskupplung der eingangs genannten Art unter anderem dadurch erzielt, dass wenigstens einige der in Umfangsrichtung benachbart angeordneten Hebelelemente der Hebelanordnung zur Bildung der Verschwenklagerung jeweils ein Abstützelement tragen, das auf der dem Deckel zugekehrten Seite der Hebelanordnung eine axial feste Verbindung mit dem zugeordneten Hebelelement aufweist, wobei das Abstützelement einen Verschwenkbereich bildet, mittels dessen es verschwenkbar an einem Verbindungselement abgestützt ist, das seinerseits axial am Gehäuse abgestützt ist. Ein Verbindungselement bildet somit ein Zwischenelement, das die axiale, verschwenkbare Verbindung zwischen einem Abstützelement bzw. einem entsprechend zugeordneten Hebelement und dem Gehäuse herstellt. Dadurch kann eine verschwenkbare Lagerung der ein Abstützelement tragenden Hebelelemente gegenüber dem Gehäuse gewährleistet werden. Das Abstützelement kann dabei nietartig ausgebildet sein. Durch die erfindungsgemäße Ausgestaltung wird die Hebelanordnung mittels wenigstens eines auf ihrer dem Gehäuse zugekehrten Seite vorgesehenen Verbindungselementes am Gehäuse verschwenkbar aufgehängt.

In vorteilhafter Weise kann ein Abstützelement derart ausgestaltet sein, dass es ein Versteifungselement für das zugeordnete Hebelelement bildet. Hierfür kann das als Versteifungselement ausgebildete Abstützelement in radialer Richtung länglich ausgebildet sein und zumindest sowohl in einem radial äußeren Bereich als auch in einem radial inneren Bereich axial fest mit dem zugeordneten Hebelelement bzw. der Hebelanordnung verbunden sein. Eine derartige Verbindung kann in einfacher Weise mittels Nietverbindungen erfolgen. Hierfür kann ein Abstützelement wenigstens einen Nietbereich angeformt haben, der axial durch eine Ausnehmung des Hebelelementes bzw. der Hebelanordnung hindurchgreift und auf der dem Abstützelement abgekehrten Seite der Hebelelanordnung einen Nietkopf angeformt hat. Sofern das Abstützelement ein Versteifungselement bildet, ist es zweckmäßig, wenn mehrere derartige Nietbereiche vorgesehen werden, um eine einwandfreie Verbindung herzustellen und zu gewährleisten, dass die mit einem Abstützelement versehenen Hebelelemente versteift werden. Dadurch können Wegverluste infolge einer elastischen Verformung der Hebelelemente durch die Kupplungsbetätigungskraft zumindest erheblich minimiert werden. Dies wiederum bewirkt, dass bei gleichbleibendem Betätigungs- und Lüftweg der Kupplung die resultierende Übersetzung verbessert wird, also der Wirkungsgrad der Betätigung erhöht wird.

Obwohl es zweckmäßig sein kann, wenn eine Mehrzahl von Verbindungselementen Verwendung findet, ist es für die Herstellung und die Montage einer Reibungskupplung besonders zweckmäßig, wenn lediglich ein einziges Verbindungselement für alle Abstützelemente verwendet wird.

Die axiale Abstützung bzw. die verschwenkbare Lagerung der Hebelanordnung wird dadurch gewährleistet, dass ein Bereich des wenigstens einen Verbindungselementes axial zwischen jeweils einem Abstützelement und dem zugeordneten Hebelelement bzw. der Hebelanordnung eingespannt ist. Dadurch kann sowohl eine axiale als auch eine radiale Positionierung bzw. Halterung der Hebelanordnung gegenüber dem Gehäuse gewährleistet werden.

In vorteilhafter Weise kann das Verbindungselement ringartig ausgebildet sein und in Umfangsrichtung verlaufende, in axialer Richtung mäanderförmig ausgebildete Bereiche besitzen, welche erste Teilbereiche und axial gegenüber diesen versetzte zweite Teilbereiche bilden, welche miteinander verbunden sind. An den ersten Teilbereichen sind die Abstützelemente axial abgestützt bzw. eingehängt und die zweiten Teilbereiche sind am Gehäuse abgestützt bzw. eingehängt. Das Verbindungselement verläuft also immer auf der gleichen axialen Seite der Hebelanordnung.

Zweckmäßig kann es sein, wenn das Gehäuse einen Innenrand aufweist, der eine Öffnung begrenzt, wobei der Innenrandverlauf des Gehäuses radiale Vorsprünge bildet, an denen zumindest ein Verbindungselement axial abgestützt ist. Diese Abstützung kann mittels der zuvor beschriebenen zweiten Teilbereiche eines ringartigen Verbindungselementes erfolgen.

In die zwischen den radialen Vorsprüngen des Gehäuses gebildeten Freiräume können in vorteilhafter Weise die ersten Teilbereiche eines Verbindungselementes aufgenommen sein. Die radialen Vorsprünge, die eine zungenförmige Ausbildung besitzen können, können eine Abwälzkontur für die Hebelanordnung bilden.

Für den Zusammenbau und die Funktion der Reibungskupplung kann es weiterhin besonders vorteilhaft sein, wenn die ersten Teilbereiche und die zweiten Teilbereiche eines Verbindungselementes in Bezug aufeinander derart ausgebildet sind, dass das Verbindungselement zumindest in axialer Richtung Federeigenschaften, also eine Eigenelastizität besitzt. Dies ermöglicht bei der Montage der Reibungskupplung, das Verbindungselement in einen federnd verspannten Zustand zu bringen, der gewährleistet, dass mittels der Abstützelemente die Hebelanordnung axial gegen die wenigstens eine, vom Gehäuse getragene Abwälzkontur zur Verschwenkung der Hebelanordnung verspannt wird. In vorteilhafter Weise ist die dabei aufgebaute Axialkraft, welche auf die Hebelanordnung wirkt, größer als die über die Lebensdauer der Reibungskupplung auftretende, maximale Ausrückkraft bzw. Betätigungskraft, welche auf die Hebelanordnung ausgeübt wird.

Die erfindungsgemäße Ausgestaltung der Reibungskupplung ermöglicht, den Schwenkdurchmesser für die Hebelanordnung praktisch frei zu wählen. Dadurch kann auch bei Tellerfedern der ringförmige Verschwenkbereich radial in den Bereich des ringartigen Grundkörpers der Tellerfeder verlagert werden. Letzteres bedeutet wiederum, dass auch bei als Versteifungselemente ausgebildeten Abstützelementen diese sich zumindest teilweise radial in den ringförmigen Grundkörper hinein erstrecken können, wodurch eine besonders effektive Versteifung der Tellerfederzungen, welche Hebelelemente bilden, gewährleistet wird. Dies ist darauf zurückzuführen, dass auch der Übergangsbereich zwischen den Tellerfederzungen und dem ringförmigen Grundkörper versteift wird.

Weitere Vorteile und zweckmäßige Ausgestaltungsmerkmale werden in Zusammenhang mit der nun folgenden Figurenbeschreibung erläutert.

Dabei zeigt:
- Figur 1: eine perspektivische Draufsicht einer erfindungsgemäß ausgestalteten Reibungskupplung und
- Figur 2: einen Querschnitt der Reibungskupplung gemäß Figur 1.

Die in den Figuren dargestellte Reibungskupplung 1 besitzt ein Kupplungsgehäuse 2, das hier durch einen Blechdeckel 2 gebildet ist. Das Kupplungsgehäuse 2 besitzt einen Randbereich 3 mit Öffnungen 4 zur Aufnahme von Schrauben, mittels derer die Reibungskupplung 1 unter Zwischenlegung einer Kupplungsscheibe mit einer Gegendruckplatte, wie beispielsweise einem Schwungrad, verbindbar ist.

Die Reibungskupplung 1 besitzt weiterhin eine Hebelanordnung 5, die im Folgenden noch näher beschrieben wird. Die Hebelanordnung 5 beaufschlagt radial außen eine Anpressplatte 6. Die Beaufschlagung erfolgt bei dem dargestellten Ausführungsbeispiel über einen Zwischenring 7, der Bestandteil einer Nachstelleinrichtung zum Kompensieren des an der Kupplungsscheibe auftretenden Verschleißes sein kann. Derartige Nachstelleinrichtungen sind beispielsweise durch die DE 196 38 918 A1, die DE 197 56 726 A1, die DE 102 47 013 A1 sowie den in diesen angeführten Stand der Technik bekannt geworden.

Radial weiter innen ist die Hebelanordnung 5 am Gehäuse 2 über eine Schwenklagerung 8 nach Art eines zweiarmigen Hebels verschwenkbar gelagert.

Bei der dargestellten Ausführungsform handelt es sich um eine Reibungskupplung, bei der die Hebelanordnung 5 einen äußeren, als Energiespeicher wirkenden, ringförmigen Bereich 9 aufweist, der die Schließkraft für die Reibungskupplung aufbringt. Die im Folgenden noch näher beschriebene Ausgestaltung und/oder Lagerung der Hebelanordnung 5 kann jedoch auch in Zusammenhang mit Reibungskupplungen Verwendung finden, bei denen über die Hebelanordnung zumindest ein Teil der erforderlichen Kupplungsschließkraft in die Kupplung eingeleitet wird. Bei derartigen Reibungskupplungen wird diese Schließkraft über die radial inneren Zungenspitzen der entsprechend ausgestalteten Hebelanordnung eingeleitet. Der prinzipielle Aufbau derartiger Reibungskupplungen, welche durch Einleitung einer Schließkraft auf die Hebelanordnung mittels eines Aktors geschlossen werden, ist beispielsweise durch die DE 10 2005 025773 A1, die EP 1452760 A1 und die DE 103 40 665 A1 bekannt geworden.

Die erfindungsgemäß ausgebildete Hebelanordnung 5 kann prinzipiell auch bei Reibungskupplungen Verwendung finden, bei denen die Hebelanordnung nach Art eines einarmigen Hebels gegenüber dem Kupplungsgehäuse 2 abgestützt bzw. gelagert ist. Bei einer derartigen Ausgestaltung befindet sich die Schwenklagerung 8 im radial äußeren Bereich der Hebelanordnung 5 und die Beaufschlagung der Anpressplatte 6 durch diese Hebelanordnung 5 erfolgt auf einem kleineren Durchmesser.

Die Hebelanordnung 5, welche bei dem dargestellten Ausführungsbeispiel einen als Energiespeicher dienenden, ringförmigen Randbereich 9 besitzt, bildet eine Tellerfeder 10. Die Tellerfeder 10 besitzt radial nach innen gerichtete Zungen 11, die einstückig mit dem Grundkörper 9 ausgebildet sind. Die Zungenspitzen 12 begrenzen eine ringförmige, zentrale Ausnehmung 13. In an sich bekannter Weise sind die Zungen 11 durch radial verlaufende Schlitze 14 voneinander getrennt, welche radial außen in lochförmige Erweiterungen 15 einmünden. Die Erweiterungen 15 grenzen an den ringförmigen Grundkörper 9 an.

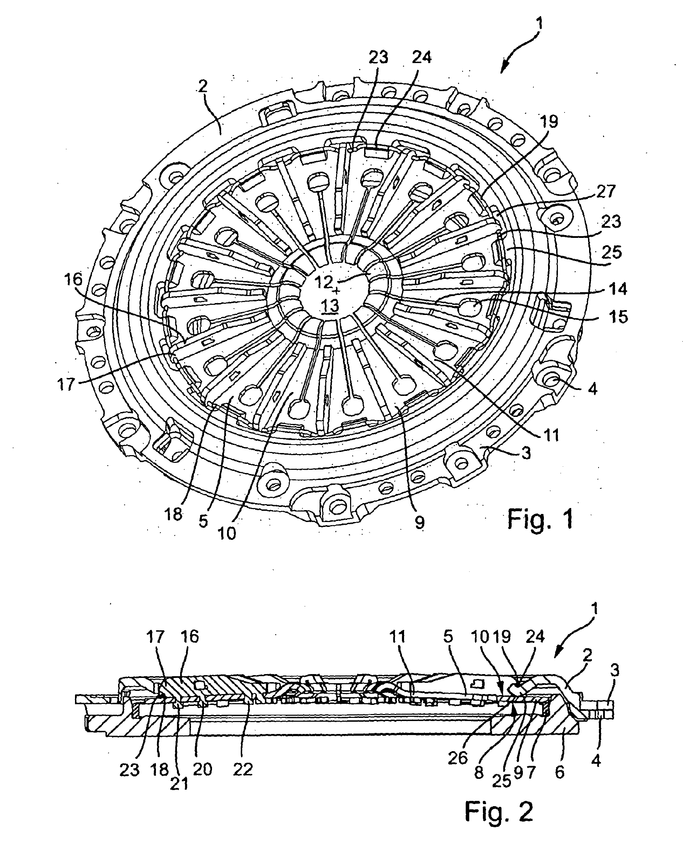

Die als Hebelelemente 11 wirksamen Zungen 11 tragen Abstützelemente 16, die auf der dem Gehäuse 2 zugewandten Seite des Hebelelementes 5 bzw. der Tellerfeder 10 vorgesehen sind. Die Abstützelemente 16 sind mit den zugeordneten Zungen 11 fest verbunden und bilden einen Verschwenkbereich 17, mittels dessen sie verschwenkbar an einem Verbindungselement 18 abgestützt sind. Das Verbindungselement 18 stützt sich seinerseits axial über Bereiche 19 am Gehäuse 2 ab. Bei dem dargestellten Ausführungsbeispiel ist jeder Zunge 11 ein Abstützelement 16 zugeordnet. Falls zweckmäßig, kann auch nur eine ganz bestimmte Anzahl von Zungen 11 ein derartiges Abstützelement 16 tragen. Die Abstützelemente 16 sind bei dem dargestellten Ausführungsbeispiel mittels Nietverbindungen 20 mit der Tellerfeder 10 verbunden. Bei dem dargestellten Ausführungsbeispiel sind die Abstützelemente 16 in radialer Richtung länglich ausgebildet. Wie insbesondere aus Figur 2 ersichtlich ist, erfolgt die Verbindung zwischen den Abstützelementen 16 und der Tellerfeder 10 derart, dass die Tellerfederzungen 11 durch die Abstützelemente 16 versteift werden. Diese Versteifung bewirkt, dass beim Betätigen der Reibungskupplung eine geringere Durchbiegung der Zungen 11 auftritt. Die bei dem dargestellten Ausführungsbeispiel gleichzeitig Versteifungselemente bildenden Abstützelemente 16 können in einfacher Weise durch Ausstanzen aus einem Blechmaterial hergestellt werden. Die Abstützelemente 16 besitzen hier eine Mehrzahl von angeformten Nietbereichen 21, die sich jeweils axial durch eine Ausnehmung im Hebelelement 5 bzw. der Tellerfeder 10 erstrecken und auf der den Abstützelementen 16 abgekehrten Seite der Tellerfeder 10 einen Nietkopf 22 angeformt haben. Die radiale Verteilung der Nietbereiche 21 gewährleistet, dass das jeweilige Versteifungselement 16 sowohl in einem radial äußeren Bereich als auch in einem radial inneren Bereich axial fest mit dem zugeordneten Hebelelement bzw. der Tellerfederzunge 11 verbunden ist.

Aus den Figuren ist auch ersichtlich, dass das Verbindungselement 18 Bereiche 23 besitzt, die axial zwischen den Abstützelementen 16 und der Tellerfeder 10 eingespannt sind.

Bei dem dargestellten Ausführungsbeispiel ist lediglich ein Verbindungselement 18 vorgesehen, das ringförmig ausgebildet ist und zur axialen Abstützung aller Versteifungs- bzw. Abstützelemente 16 dient. Es könnte jedoch auch eine Mehrzahl von Abstützelementen vorgesehen werden, wobei jedem Abstützelement eines oder mehrere der Abstützelemente 16 zugeordnet werden können.

Das hier allen Abstützelementen 16 zugeordnete Verbindungselement 18 ist, wie insbesondere aus Figur 1 ersichtlich ist, ringartig ausgebildet und besitzt in Umfangsrichtung verlaufende, in axialer Richtung betrachtet, mäanderförmig ausgebildete Bereiche, welche erste Teilbereiche 23 und axial gegenüber diesen versetzte zweite Teilbereiche 24 bilden. Die Abstützelemente 16 stützen sich axial an den ersten Teilbereichen 23 ab und die zweiten Teilbereiche 24 werden vom Gehäuse 2 abgestützt, wodurch eine axiale Festlegung der Tellerfeder 10 bzw. der Hebelanordnung 5 gegenüber dem Gehäuse 2 gewährleistet wird. Wie aus Figur 1 ersichtlich ist, ist das Gehäuse 2 im mittleren Bereich derart ausgeschnitten, dass der Innenrandverlauf des Gehäuses radiale, zungenartige Vorsprünge 25 bildet, an denen die Teilbereiche 24 des Verbindungselementes 18 aufgehängt sind. Die zungenartigen Vorsprünge 25 sind dabei im Querschnitt derart geformt, dass sie gleichzeitig eine Abwälzauflage 26 für die Tellerfeder 10 bilden.

Aus Figur 1 ist weiterhin ersichtlich, dass, in Umfangsrichtung betrachtet, zwischen den radialen Vorsprüngen 25 Freiräume bzw. radiale Einschnitte 27 vorhanden sind, in welche die gegenüber den zweiten Teilbereichen 24 axial versetzten ersten Teilbereiche 23 eintauchen bzw. aufgenommen sind.

In vorteilhafter Weise kann das wenigstens eine Verbindungselement 18 derart ausgebildet sein, dass es zumindest in Achsrichtung der Reibungskupplung Federeigenschaften besitzt. Bei der Montage der Reibungskupplung kann somit das wenigstens eine Verbindungselement 18 mittels wenigstens eines Abstützelementes 16 axial federnd verspannt werden. Die Verspannung des Verbindungselementes 18 gewährleistet, dass die Hebelanordnung 5 axial gegen die wenigstens eine vom Gehäuse getragene Abwälzauflage 26 verspannt wird. Die axiale Verspannungskraft, mit der die Hebelanordnung 5 gegen die Abwälzauflage 26 gedrängt wird, ist dabei größer als die über die Lebensdauer der Reibungskupplung im Bereich der Zungenspitzen 12 einwirkende, maximale Betätigungskraft. Dadurch wird gewährleistet, dass die Hebelanordnung 5 stets in Anlage an der Abwälzauflage 26 bleibt.

Wie aus den Figuren zu entnehmen ist, ermöglicht die erfindungsgemäße, schwenkbare Halterung der Hebelelanordnung 5 am Gehäuse 2 den ringartigen Verschwenkbereich bzw. die Schwenklagerung 8 radial innerhalb des ringförmigen Grundkörpers 9 der hier als Tellerfeder ausgebildeten Hebelanordnung vorzusehen. Man kann also praktisch den Durchmesser der Schwenklagerung 8 frei wählen.

In vorteilhafter Weise können die Nietverbindungen 20 auch zur Halterung von gegebenenfalls notwendigen zusätzlichen Elementen herangezogen werden. Es könnte beispielsweise mittels der Nietelemente 20 ein weiteres Federelement an der Hebelanordnung 5 befestigt werden. Dieses Federelement könnte beispielsweise durch ein tellerfederartiges Bauteil gebildet sein. Die Wirkung dieses tellerfederartigen Bauteils und der Hebelanordnung 5 können sich dabei addieren, so dass ein definierter, resultierender Kraft-Weg-Verlauf realisierbar ist.

### Bezugszeichenliste

- 1: Reibungskupplung
- 2: Kupplungsgehäuse
- 3: Randbereich
- 4: Öffnungen
- 5: Hebelanordnung
- 6: Anpressplatte
- 7: Zwischenring
- 8: Schwenklagerung
- 9: Ringförmiger Bereich
- 10: Tellerfeder
- 11: Zungen
- 12: Zungenspitzen
- 13: Ausnehmung
- 14: Schlitze
- 15: Erweiterungen
- 16: Abstützelemente
- 17: Verschwenkbereich
- 18: Verbindungselement
- 19: Bereiche
- 20: Nietverbindungen
- 21: Nietbereiche
- 22: Nietkopf
- 23: Erste Teilbereiche
- 24: Zweite Teilbereiche
- 25: Vorsprünge
- 26: Abwälzauflage
- 27: Radiale Einschnitte

## Patentansprüche

1. Reibungskupplung, bestehend zumindest aus einem Gehäuse und einer mit diesem drehfest, jedoch begrenzt axial verlagerbar gekoppelten Anpressplatte, wobei am Gehäuse eine Hebelanordnung verschwenkbar gelagert ist, mittels der die Anpressplatte beaufschlagbar ist, wobei die Hebelanordnung zumindest aus einer Vielzahl von in ringartiger Anordnung vorgesehenen Hebelelementen besteht, **dadurch gekennzeichnet, dass** wenigstens einige der Hebelelemente (11) zur Bildung einer Verschwenklagerung (8) für die Hebelanordnung (5) jeweils ein Abstützelement (16) tragen, das auf der dem Deckel zugekehrten Seite der Hebelanordnung vorgesehen ist und eine axial feste Verbindung mit dem zugeordneten Hebelelement aufweist, wobei das Abstützelement (16) einen Verschwenkbereich (17) besitzt, mittels dessen es verschwenkbar an einem Verbindungselement (18) abgestützt ist, das seinerseits axial am Gehäuse (2) abgestützt ist.

2. Reibungskupplung nach Anspruch 1, **dadurch gekennzeichnet, dass** das Abstützelement (16) ein Versteifungselement für das zugeordnete Hebelelement bildet.

3. Reibungskupplung nach Anspruch 2, **dadurch gekennzeichnet, dass** das Versteifungselement (16) in radialer Richtung länglich ausgebildet ist und zumindest sowohl in einem radial äußeren Bereich als auch in einem radial inneren Bereich axial fest mit dem zugeordneten Hebelelement (11) verbunden ist.

4. Reibungskupplung nach einem der Ansprüche 1 bis 3, **dadurch gekennzeichnet, dass** das Abstützelement (16) mit dem entsprechenden Hebelelement vernietet (bei 20) ist.

5. Reibungskupplung nach einem der Ansprüche 1 bis 4, **dadurch gekennzeichnet, dass** das Abstützelement (16) wenigstens einen Nietbereich (21) angeformt hat, der axial durch eine Ausnehmung des Hebelelementes (11) hindurchgreift und auf der dem Abstützelement abgekehrten Seite des Hebelelementes einen Nietkopf (22) angeformt hat.

6. Reibungskupplung nach einem der Ansprüche 1 bis 5, **dadurch gekennzeichnet, dass** das Verbindungselement (18) einen Bereich (23) hat, der axial zwischen einem Abstützelement (16) und dem zugeordneten Hebelelement (11) eingespannt ist.

7. Reibungskupplung nach einem der Ansprüche 1 bis 6, **dadurch gekennzeichnet, dass** die von der Hebelanordnung (5) getragenen Abstützelemente (16) über ein gemeinsames Verbindungselement am Gehäuse verschwenkbar abgestützt sind.

8. Reibungskupplung nach einem der Ansprüche 1 bis 7, **dadurch gekennzeichnet, dass** das Verbindungselement (18) ringartig ausgebildet ist und in Umfangsrichtung verlaufende, in axialer Richtung betrachtet, mäanderförmig ausgebildete Bereiche besitzt, die erste Teilbereiche (23) und axial gegenüber diesen versetzte zweite Teilbereiche (24) bilden, wobei an den ersten Teilbereichen die Abstützelemente (16) axial abgestützt sind und die zweiten Teilbereiche (24) am Gehäuse (2) abgestützt sind.

9. Reibungskupplung nach einem der Ansprüche 1 bis 8, **dadurch gekennzeichnet, dass** das Gehäuse einen Innenrand aufweist, der eine Öffnung begrenzt, wobei der Innenrandverlauf des Gehäuses radiale Vorsprünge (25) bildet, an denen zumindest ein Verbindungselement axial abgestützt ist.

10. Reibungskupplung nach Anspruch 8 oder 9, **dadurch gekennzeichnet, dass** an den radialen Vorsprüngen (25) des Gehäuses (2) die zweiten Teilbereiche (24) abgestützt sind.

11. Reibungskupplung nach einem der Ansprüche 8 bis 10, **dadurch gekennzeichnet, dass,** in Umfangsrichtung betrachtet, Freiräume (27) zwischen den radialen Vorsprüngen vorhanden sind, in welche die gegenüber den zweiten Teilbereichen (24) axial versetzten ersten Teilbereiche (23) aufgenommen sind.

12. Reibungskupplung nach einem der Ansprüche 9 bis 11, **dadurch gekennzeichnet, dass** die radialen Vorsprünge (25) eine Abwälzkontur (26) bilden für die Hebelanordnung.

13. Reibungskupplung nach einem der Ansprüche 8 bis 12, **dadurch gekennzeichnet, dass** die ersten Teilbereiche (23) und die zweiten Teilbereiche (24) des Verbindungselementes (18) in Bezug aufeinander derart ausgebildet sind, dass das Verbindungselement (18) zumindest in axialer Richtung Federeigenschaften besitzt.

14. Reibungskupplung nach Anspruch 13, **dadurch gekennzeichnet, dass** das Verbindungselement federnd verspannt ist, wodurch mittels der Abstützelemente (16) die Hebelanordnung (5) axial gegen die wenigstens eine vom Gehäuse getragene Abwälzkontur (26) zur Verschwenkung der Hebelanordnung (5) verspannt ist.

## Claims

1. Friction clutch, composed at least of a housing and of a pressure plate which is coupled to said housing in a rotationally fixed manner but so as to be axially movable to a limited extent, with a lever arrangement being pivotably mounted on the housing, by means of which lever arrangement the pressure plate can be acted on, with the lever arrangement being composed at least of a multiplicity of lever elements which are provided in an annular arrangement, **characterized in that** at least some of the lever elements (11) have, to form a pivot mounting (8) for the lever arrangement (5), in each case one support element (16) which is provided on that side of the lever arrangement which faces towards the cover, which support element (16) has an axially fixed connection to the associated lever element, with the support element (16) having a pivot region (17) by means of which said support element (16) is pivotably supported on a connecting element (18) which in turn is supported axially on the housing (2).

2. Friction clutch according to Claim 1,
**characterized in that** the support element (16) forms a stiffening element for the associated lever element.

3. Friction clutch according to Claim 2,
**characterized in that** the stiffening element (16) is of elongate design in the radial direction and is axially fixedly connected to the associated lever element (11) at least both in a radially outer region and also in a radially inner region.

4. Friction clutch according to one of Claims 1 to 3, **characterized in that** the support element (16) is riveted (at 20) to the corresponding lever element.

5. Friction clutch according to one of Claims 1 to 4, **characterized in that** the support element (16) has integrally formed on it at least one rivet region (21) which extends axially through a recess in the lever element (11) and which, on that side of the lever element which faces away from the support element, has integrally formed on it a rivet head (22).

6. Friction clutch according to one of Claims 1 to 5, **characterized in that** the connecting element (18) has a region (23) which is braced axially between a support element (16) and the associated lever element (11).

7. Friction clutch according to one of Claims 1 to 6, **characterized in that** the support elements (16) which are provided on the lever arrangement (5) are pivotably supported on the housing by means of a common connecting element.

8. Friction clutch according to one of Claims 1 to 7, **characterized in that** the connecting element (18) is of annular design and has regions which run in the circumferential direction and which are of meandering design as viewed in the axial direction and which form first partial regions (23) and, offset axially with respect thereto, second partial regions (24), with the support elements (16) being supported axially on the first partial regions and with the second partial regions (24) being supported on the housing (2).

9. Friction clutch according to one of Claims 1 to 8, **characterized in that** the housing has an inner edge which delimits an opening, with the inner edge profile of the housing forming radial projections (25) on which at least one connecting element is axially supported.

10. Friction clutch according to Claim 8 or 9,
**characterized in that** the second partial regions (24) are supported on the radial projections (25) of the housing (2).

11. Friction clutch according to one of Claims 8 to 10, **characterized in that** clearances (27) are provided between the radial projections as viewed in the circumferential direction, in which clearances (27) are held the first partial regions (23) which are offset axially with respect to the second partial regions (24).

12. Friction clutch according to one of Claims 9 to 11, **characterized in that** the radial projections (25) form a rolling contour (26) for the lever arrangement.

13. Friction clutch according to one of Claims 8 to 12, **characterized in that** the first partial regions (23) and the second partial regions (24) of the connecting element (18) are designed in such a way in relation to one another that the connecting element (18) has spring properties at least in the axial direction.

14. Friction clutch according to Claim 13,
**characterized in that** the connecting element is resiliently braced, as a result of which the lever arrangement (5) is braced axially by means of the support elements (16) against the at least one rolling contour (26), which is provided on the housing, for the pivoting of the lever arrangement (5).

## Revendications

1. Embrayage à friction, constitué d'au moins un boîtier et d'un plateau de pression accouplé à celui-ci de manière solidaire en rotation mais déplaçable axialement dans une mesure limitée, un agencement de levier étant monté de manière pivotante sur le boîtier et permettant de solliciter le plateau de pression, l'agencement de levier se composant au moins d'une pluralité d'éléments de levier prévus suivant un agencement annulaire, **caractérisé en ce qu'**au moins certains des éléments de levier (11), pour former un support sur palier pivotant (8) pour l'agencement de levier (5), portent chacun un élément de support (16) qui est prévu du côté de l'agencement de levier tourné vers le couvercle et présente une connexion fixe axialement avec l'élément de levier associé, l'élément de support (16) possédant une région de pivotement (17) au moyen de laquelle il est supporté de manière pivotante sur un élément de liaison (18) qui est pour sa part supporté axialement sur le boîtier (2).

2. Embrayage à friction selon la revendication 1, **caractérisé en ce que** l'élément de support (16) forme un élément de renforcement pour l'élément de levier associé.

3. Embrayage à friction selon la revendication 2, **caractérisé en ce que** l'élément de renforcement (16) est réalisé sous forme allongée dans la direction radiale et est connecté fixement axialement à l'élément de levier associé (11) au moins à la fois dans une région radialement extérieure et dans une région radialement intérieure.

4. Embrayage à friction selon l'une quelconque des revendications 1 à 3, **caractérisé en ce que** l'élément de support (16) est riveté (en 20) à l'élément de levier correspondant.

5. Embrayage à friction selon l'une quelconque des revendications 1 à 4, **caractérisé en ce que** l'élément de support (16) présente au moins une région de rivetage (21) venue de moulage, qui traverse axialement un évidement de l'élément de levier (11) et qui présente, du côté de l'élément de levier opposé à l'élément de support, une tête de rivet (22) venue de moulage.

6. Embrayage à friction selon l'une quelconque des revendications 1 à 5, **caractérisé en ce que** l'élément de liaison (18) présente une région (23) qui est serrée axialement entre un élément de support (16) et l'élément de levier associé (11).

7. Embrayage à friction selon l'une quelconque des revendications 1 à 6, **caractérisé en ce que** les éléments de support (16) portés par l'agencement de levier (5) sont supportés de manière pivotante par le biais d'un élément de connexion commun sur le boîtier.

8. Embrayage à friction selon l'une quelconque des revendications 1 à 7, **caractérisé en ce que** l'élément de liaison (18) est réalisé sous forme annulaire et possède, s'étendant dans la direction périphérique, vu dans la direction axiale, des régions réalisées en forme de méandres qui forment des premières régions partielles (23) et des deuxièmes régions partielles (24) décalées axialement par rapport à celles-ci, les éléments de support (16) étant supportés axialement sur les premières régions partielles et les deuxièmes régions partielles (24) étant supportées sur le boîtier (2).

9. Embrayage à friction selon l'une quelconque des revendications 1 à 8, **caractérisé en ce que** le boîtier présente un bord interne qui délimite une ouverture, le contour du bord interne du boîtier formant des saillies radiales (25) sur lesquelles est supporté axialement au moins un élément de connexion.

10. Embrayage à friction selon les revendications 8 ou 9, **caractérisé en ce que** les deuxièmes régions partielles (24) sont supportées sur les saillies radiales (25) du boîtier (2).

11. Embrayage à friction selon l'une quelconque des revendications 8 à 10, **caractérisé en ce que,** considéré dans la direction périphérique, des espaces libres (27) sont prévus entre les saillies radiales, dans lesquels sont reçues les premières régions partielles (23) décalées axialement par rapport aux deuxièmes régions partielles (24).

12. Embrayage à friction selon l'une quelconque des revendications 9 à 11, **caractérisé en ce que** les saillies radiales (25) forment un contour de déroulement (26) pour l'agencement de levier.

13. Embrayage à friction selon l'une quelconque des revendications 8 à 12, **caractérisé en ce que** les premières régions partielles (23) et les deuxièmes régions partielles (24) de l'élément de liaison (18) sont réalisées les unes par rapport aux autres de telle sorte que l'élément de liaison (18) possède des propriétés élastiques au moins dans la direction axiale.

14. Embrayage à friction selon la revendication 13, **caractérisé en ce que** l'élément de liaison est serré de manière élastique, de sorte qu'au moyen des éléments de support (16), l'agencement de levier (5) soit serré axialement contre l'au moins un contour de déroulement (26) porté par le boîtier en vue de faire pivoter l'agencement de levier (5).
